# EUROPÄISCHE PATENTSCHRIFT

(11) **EP 0 974 837 B1**
(45) Veröffentlichungstag und Bekanntmachung des Hinweises auf die Patenterteilung: **18.07.2007**
(21) Anmeldenummer: 99109512.6
(22) Anmeldetag: 12.05.1999
(51) Int. Cl.: G01N 29/22, G01N 29/04

(54) **Verfahren und Vorrichtung zur zerstörungsfreien Ultraschallprüfung von zu walzendem, noch gut verformbarem Stahl auf Innenfehler**
Method and device for the nondestructive ultrasonic testing of steel to be rolled, in a still easily deformable state
Méthode et appareil pour le controle non destructif, ultrasonore d'acier a laminer, dans une état encore facilement deformable

(30) Priorität: 24.07.1998 DE 19833386; 03.04.1999 DE 19915203
(43) Veröffentlichungstag der Anmeldung: 26.01.2000
(73) Patentinhaber: Georgsmarienhütte GmbH, 49124 Georgsmarienhütte (DE)
(72) Erfinder: Scharlemann, Horst, D-49170 Hagen (DE)
(74) Vertreter: Röther, Peter

(56) Entgegenhaltungen:
- WO-A-82/03920
- US-A- 3 620 061
- US-A- 4 640 133

## Beschreibung

Die Erfindung betrifft ein Verfahren und eine Vorrichtung zur zerstörungsfreien Prüfung von zu walzendem, noch gut verformbarem Stahl auf Innenfehler mittels mindestens eines Ultraschallprüfkopfes.

Die zerstörungsfreie Werkstoffprüfung mittels Ultraschall ist seit langem bekannt.

So ist beispielsweise in der DE-PS 32 04 797 ein Verfahren beschrieben, bei dem ein fertiges Werkstück, beispielsweise ein Rohr, mit einem Prüfkopf beschallt wird, wobei die Ankopplung der Schallenergie über eine Wasserstrecke zwischen Kopf und Werkstück bewirkt wird.

Die Detektion von Fehlstellen im Werkstück erfolgt im sogenannten Impuls-Echo-Verfahren, das heißt, daß der vom Prüfkopf ausgesendete Schall zum einen an der Oberfläche, zum anderen an der Rückwand nach Durchstrahlung des Werkstücks reflektiert wird. Es bilden sich in der Anzeige somit zwei mehr oder weniger scharfe Impulse mit bestimmter Amplitude. Fällt die Schallwelle innerhalb des Werkstücks auf eine Fehlstelle (Riß, Einschluß, etc.), wird sie auch an dieser Stelle reflektiert, und es bildet sich ein dritter Impuls, der Fehlerimpuls. Da die Schallenergie mehrfach zwischen Fehlstelle und Prüfkopf hin- und herläuft, ist Gegenstand der zitierten Druckschrift ein Verfahren, mit dem derartige zusätzliche, nicht interessierende Impulse ausgeblendet werden können, bzw. auch Impulse, die von eventuellen Verunreinigungen im Ankoppelmedium herrühren. Die

Prüfung findet an einem fertigen Werkstück statt unter Benutzung eines flüssigen Ankoppelmediums, in welchem - wie erwähnt - ebenfalls Fremdkörper, die die Messungen stören, vorhanden sein können.

Zusätzlich wird noch die US-A 3 620 061 genannt, in der eine Vorrichtung beschrieben ist, die aus einer Walze besteht, in die ein Ultraschallsender eingebaut ist. Zweck dieser Vorrichtung ist jedoch durch Erzeugung von Vibrationen eine Entlastung beim Walzvorgang selbst. Die Ultraschallwellen dienen somit nicht dazu, das Walzgut zu durchdringen und auf etwaige Innenfehler zu untersuchen.

Schließlich muss noch die US-A 3 401 547 erwähnt werden, in der ein Verfahren beschrieben wird, bei dem mittels Ultraschallwellen zu walzendes Material auf die korrekte Dicke überprüft wird. Es ist zwar dort auch schon darauf hingewiesen worden, dass auch Störungen im Metall dabei detektiert werden. Die Ultraschallköpfe sind jedoch bei der dort vorgestellen Vorrichtung innerhalb der Walzen angeordnet, was den Nachteil hat, dass die Prüfköpfe schwer zugänglich sind und auch individuell nicht ausgerichtet und verstellt werden können. Zudem wird als Ankoppelmedium Fett oder Öl vorgeschlagen, was unter Kostengesichtspunkten und Gesichtspunkten des Umweltschutzes bedenklich ist.

Gegenstand der vorliegenden Erfindung ist es daher, im kontinuierlichen Verfahren während des Walzprozesses derartige Fehler innerhalb des Walzgutes aufspüren zu können. Das heißt, daß das zu prüfende Material heiß ist, so dass die Ankopplung über Fett oder Öl nicht unbedingt machbar ist.

Der zu walzende Stahl, beispielsweise in Form von Stäben, wird insbesondere im Kokillen-Stranggießverfahren hergestellt, bei dem der aus der Kokille heraustretende, sich verfestigende Strang in einem Bogen in die Horizontale zur Walzstrecke geführt wird. Infolge der Schwerkraft reichern sich im flüssigen Stahl vorhandene Fremdkörper mehr im Bereich zwischen der Strangachse und dem bereits verfestigten unteren Außenbereich des Stranges an.

Insbesondere diese Einschlüsse gilt es mit dem erfindungsgemäßen Verfahren während des Walzprozesses zu detektieren.

Gemäß Patentanspruch 1 wird dieses Verfahren so geführt, daß die Ultraschallwellen mittels eines außen an der Walze/Rolle ausgerichteten Ultraschallprüfkopfes durch den als Vorlaufstrecke dienenden walzen-/Rollenkörper selbst oder einen umfangnahen Teil davon gesendet werden, bevor sie auf das zu prüfende Walzmaterial treffen, wobei sie derart ausgerichtet werden, dass sie dort auf die Walzmaterialoberfläche treffen, wo dieses den innigsten Kontakt mit der Walze aufweist, dort nämlich, wo das maximale Rückwandecho erzielt wird.

Der Prüfort und der Walzort fallen somit zusammen, so daß bei der Aufspürung signifikanter Fehler schnell reagiert werden kann.

Es wird angestrebt, daß die Ultraschallwellen dort auf die Walzmaterialoberfläche auftreffen, wo noch intensiv in radialer Richtung verformt wird, d.h. im Bereich der Einlaufstelle des Walzgutes in das Walzgerüst. Versuche haben gezeigt, daß ein maximales Rückwandecho erzielt wird, wenn das Walzgut keinerlei Zug unterworfen ist, d.h. weiterhin, daß eine gute Synchronisation zwischen den Walzblöcken gewährleistet sein muß.

Da das Rückwandecho ein Indiz für diese gute Synchronisation zwischen den Blöcken ist, besteht durch die erfindungsgemäße Methode ebenfalls die Möglichkeit, durch Optimierung des Rückwandechos eine gute Synchronisation zwischen den Blöcken zu generieren.

Ein weiterer Vorteil des erfindungsgemäßen Verfahrens ist darin zu sehen, daß die Vorlauf- und Einkoppelstrecke durch die Walze/Rolle selbst gebildet wird. Diese Vorlauf- oder Einkoppelstrecke ist somit geeignet, da spontan wechselnde Fehlstellen wie in dem oben erwähnten flüssigen Einkoppelmedium nicht auftreten. Darüber hinaus ist das Walzenmaterial, insbesondere im umfangnahen Bereich, besonders feinkörnig und fehlstellenarm.

An der Grenzfläche von relativ kalter Walze/Rolle zu heißem Stahl findet die erste Reflektion der Schallwellen statt, der nicht reflektierte Anteil wird aufgrund der nun anderen Ausbreitungsgeschwindigkeit zum Einfallslot gebrochen, durchläuft den Prüfling und wird an der gegenüberliegenden Grenzfläche reflektiert. Befinden sich zwischen erster Reflektion und Rückwandecho Fehlstellen, insbesondere Einschlüsse, werden die Schallwellen auch an diesen reflektiert, wodurch im Empfangsteil des Prüfkopfs ein Impuls bestimmter Amplitude erzeugt wird, der im Amplituden-Zeit-Diagramm zwischen den beiden Randreflektionsimpulsen liegt.

Die Ultraschallwellen werden derart auf die Walzmaterialoberfläche gerichtet, daß sie nach Durchdringen des Walzmaterials in sich zum Empfänger zurückreflektiert werden. Hierdurch wird das Prüfmaterial vollständig durchschallt. Die beschriebene Prüfung ist sowohl mit Normal- als auch S-E-Prüfköpfen durchführbar.

Da Fehlstellen im Randbereich infolge der endlichen Breite des Reflektionsimpulses mittels eines Prüfkopfes, der longitudinale Schallwellen aussendet, die lotrecht auf die Walzgutoberfläche treffen und darüber hinaus nur einen Teilbereich des Prüflings durchstrahlen, nicht detektiert werden können, ist erfindungsgemäß vorgesehen, daß insbesondere in einem Mehrwalzengerüst, bei dem die scheibenförmigen Walzen/Rollen sternförmig um den Walzspalt herum angeordnet sind (sogenannter Kocksblock), jeder dieser Walzen mindestens ein Ultraschallprüfkopf zugeordnet ist. Die Anordnung der Prüfköpfe wird so getroffen, daß die Schallwellenbündel aller Prüfköpfe den gesamten Querschnitt des Prüflings erfassen.

Noch genauer und effektiver arbeitet die Vorrichtung, wenn auf beiden Seiten jeder der scheibenförmigen Walzen/Rollen ein Ultraschallprüfkopf vorgesehen ist.

Umfangsnahe Fehler im Walzmaterial können jedoch auch dadurch aufgespürt werden, daß die Ultraschallwellen derart auf die Walzmaterialoberfläche gerichtet sind, daß sie im Walzmaterial oberflächennah mehrfach entlang dem Umfang reflektiert werden, bevor sie zum Empfänger gelangen.

Hierbei sind Sender und Empfänger getrennt voneinander.

Zur Positionierung der Prüfköpfe sind seitlich an den scheibenförmigen Walzen/Rollen entweder im Querschnitt keilförmige Ringnuten eingefräst oder im Querschnitt keilförmige Ringschultern angeformt. Die zum Walzenumfang zeigende Nutfläche bzw. Schulterfläche bewegt sich während des Walzens unter der Detektorfläche des stationären Prüfkopfes vorbei, wobei lediglich ein geringer, mit Wasser gefüllter Spalt zwischen Kopf und Walze vorhanden ist.

Die erfindungsgemäße Vorrichtung ist jedoch nicht nur auf die eben beschriebene Mehrwalzengerüste beschränkt. Es können die Prüfköpfe auch bei Profilwalzen eingesetzt werden, bei denen dann die Prüfköpfe seitlich neben den eigentlichen Walzspalt in diesen benachbarten Profilnuten positioniert sind und das diese Nuten und den Walzspalt voneinander trennende Walzmaterial als Vorlaufstrecke durchstrahlen

Dabei weisen jeweils zwei auf verschiedenen Seiten des Walzspalts angeordnete Ultraschallprüfköpfe einander diametral entgegengesetzte Schallausbreitungsrichtungen auf.

Diese Anordnung bietet sich bei Walzen mit Flachkantprofil an.

Bei Walzen mit Spießkantprofil können die Prüfköpfe am Außenumfang der Walzen positioniert sein, so daß der Schall den gesamten Walzenkörper durchläuft, bevor er auf den Walzspalt und somit auf das Walzgut trifft.

Auch hierbei können mehrere Prüfköpfe vorgesehen sein, die das Walzgut von verschiedenen Seiten beschallen.

Als besonders geeignete Prüfköpfe bei den bisher beschriebenen Anwendungen haben sich solche mit Piezoschwinger als Schallerzeuger erwiesen.

Zur Einstellung der Beschallungsrichtung kann vorgesehen sein, daß der mindestens eine Ultraschall-Prüfkopf in Walzrichtung und/oder senkrecht dazu verschwenkbar und/oder verschiebbar ist.

Eine Alternative hierzu schlägt vor, daß der mindestens eine Prüfkopf eine Vielzahl von unabhängig voneinander ansteuerbaren Piezoschwingern als Erzeuger einer Schallwellenfront aufweist.

Die einzelnen Piezoschwinger werden zeitlich versetzt zueinander angesteuert. Abhängig von der Zeitdifferenz ergibt sich eine Schallwellenfront mit unterschiedlicher Ausbreitungsrichtung.

Es kann vorgesehen sein, daß die Ankoppelfläche des/der Ultraschall-Prüfkopfes(-Köpfe) konvex oder konkav gewölbt ist, wodurch sich eine Fokussierung bzw. Defokussierung der Schallwellen ergibt.

Vorzugsweise wird die erfindungsgemäße Vorrichtung an einem dem Fertiggerüst der Walzstraße vorausgehenden Walzgerüst angeordnet.

An dieser Stelle liegt eine gute Verformbarkeit des Walzgutes vor. Besonders wichtig ist es jedoch, daß hier die Vorrichtung nur einmal justiert zu werden braucht, so daß der Montage- und Justieraufwand auf ein Minimum reduziert wird.

Die Vorrichtung kann mit longitudinalen Ultraschallwellen aber auch mit transversalen Ultraschallwellen arbeiten.

Das ist insbesondere von Vorteil, da durch entsprechende Verläufe des Ultraschalls bei entsprechender Wahl der Einstrahlwinkel sowohl mittels transversaler als auch mittels longitudinaler Wellen randnahe Fehler, die radial verlaufen, detektiert werden können.

Die Erfindung wird im folgenden anhand einer Zeichnung dargestellt und näher erläutert.

Es zeigen:
- Fig. 1:: in abgebrochener Darstellung ein Mehrwalzengerüst mit drei verschiedenen Alternativen der Anordnung von Ultraschallprüfköpfen,
- Fig. 2:: in schematischer Darstellung die Anordnung von Ultraschallprüfköpfen bei Profilwalzen (Flachkant),
- Fig. 3:: in schematischer Darstellung die Anordnung von Ultraschallprüfköpfen bei Profilwalzen (Spießkant).

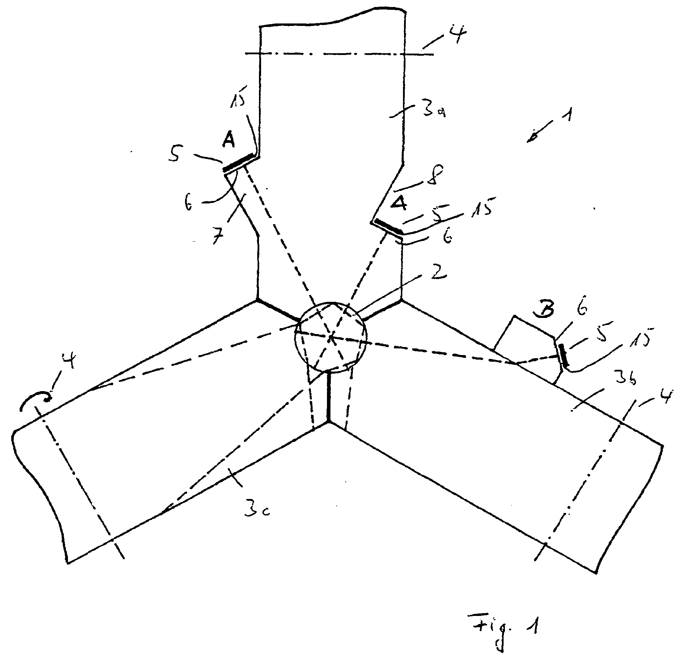

In der Fig. 1 ist schematisch ein Dreiwalzen-Walzgerüst dargestellt und allgemein mit dem Bezugszeichen 1 versehen.

Sternförmig um den in diesem Beispiel kreisförmigen Walzspalt 2 herum sind drei scheibenförmige Walzen 3a, 3b, 3c angeordnet, wobei die Drehachsen der Walzen mit 4 bezeichnet sind.

Bei der Walze 3a sind zwei alternative Anordnungen von lediglich schematisch dargestellten Ultraschallprüfköpfen 5 gezeigt. Die Einkoppelfläche 6 ist links an der Walze 3a durch eine an die Seite der Walze 3a angeformte, im Querschnitt keilförmige Ringschulter 7 verwirklicht, während sie rechts durch eine in die Walzenseite eingeformte (eingefräste) im Querschnitt keilförmige Ringnut 8 verwirklicht ist.

Die Orientierung der Einkoppelflächen 6 ist jeweils so gewählt, daß die von den Ultraschall-Prüfköpfen 5 erzeugten und empfangenen Schallwellen longitudinaler Art lotrecht auf das im Walzspalt 2 befindliche Walzgzut treffen, nachdem sie den umfangsnahen Teil der Walze 3a durchlaufen haben.

Wie bei der Walze 3c lediglich angedeutet kann die Ausbreitungsrichtung der Schallwellen auch so modifiziert werden, daß sie in einem von 90° verschiedenen Winkel auf die Walzgutoberfläche treffen und dann im Prüfling randnah unter mehrfacher Reflektion an der Grenzfläche verlaufen.

Eine dritte Alternative der Einkopplung von Ultraschallwellen ist bei der Walze 3b dargestellt. Hierbei ist auf die Walzenseitenfläche eine im Querschnitt trapezförmige Ringschulter 9 aufgesetzt, wobei die schräge Fläche die Einkoppelfläche 6 bildet. Der an dieser Einkoppelfläche 6 positionierte Ultraschall-Prüfkopf 5 sendet transversale Ultraschallwellen aus, die an der Grenzfläche 10 zwischen Ringschulter 9 und Walze 3b so gebrochen werden, daß sie ebenfalls lotrecht auf die Walzgutoberfläche treffen.

Alle drei Walzen 3a, 3b und 3c können beidseitig mit einer dieser Alternativen ausgestattet sein oder aber auch mit Kombinationen derselben.

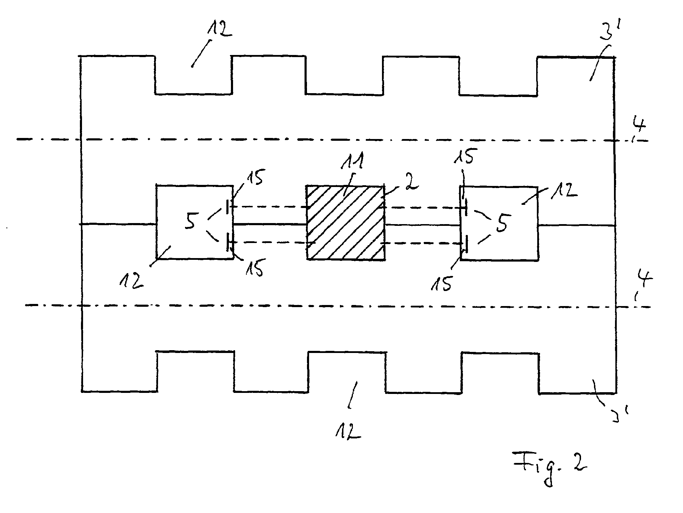

In der Fig. 2 ist die Anordnung der Ultraschall-Prüfköpfe 5 in einer Profilwalzanlage dargestellt. Es wird ein Flachkantprofil 11 gewalzt. Neben der den Walzspalt 2 bildenden Profilnut befinden sich in der Walze 3' weitere Profilnuten 12, wobei an/in den auf den Walzspalt 2 weisenden Profilwänden die Ultraschall-Prüfköpfe angeordnet sind, die das Walzenmaterial horizontal durchstrahlen und die Schallausbreitungsrichtung der beidseitig des Walzspalts 2 angeordneten Ultraschall-Prüfköpfe 5 diametral entgegengesetzt sind.

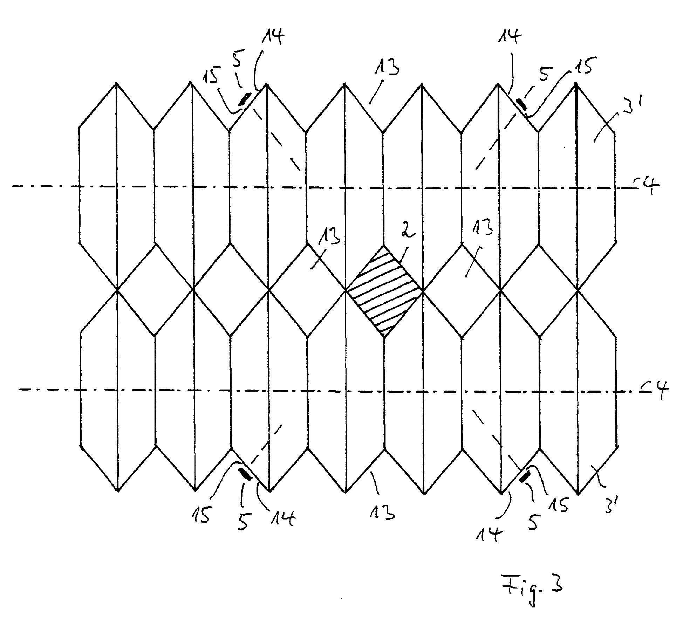

In der Fig. 3 schließlich ist die Anordnung der Ultraschall-Prüfköpfe 5 an einem Profilwalzsystem dargestellt, das Spießkantprofile walzt.

Der Walzspalt 2 wird hier durch im Querschnitt dreieckförmige Profilnuten 13 gebildet, wobei neben dieser Profilnut 13 weitere gleichartige Profilnuten vorgesehen sind.

Die Ultraschall-Prüfköpfe 5 befinden sich hier auf der vom Walzspalt 2 abgewandten Seite der Profilwalzen 3', so daß die von ihnen ausgesandten Schallwellen den gesamten Walzenkörper durchstrahlen, bevor sie lotrecht auf das Walzgut treffen.

Die Ultraschall-Prüfköpfe 5 sind dabei auf verschiedenen Seiten des Walzspalts 2 vorzugsweise an/in den Flanken 14 der Profilnuten positioniert.

In allen beschriebenen Fällen sind die Prüfköpfe 5 stationär angeordnet, während die Walzen 3, 3' bzw. die Einkoppelfächen 6 am Prüfkopf vorbeilaufen. Zwischen Prüfkopf 5 und Einkoppelfläche 6 befindet sich ein Wasserfilm 15.

Der Einkoppelort der Schallwellen in das zu prüfende Walzgut befindet sich vorzugsweise unmittelbar hinter der Einlaufstelle des Walzguts in den Walzspalt, also dort, wo Walze und Walzgutoberfläche in innigem Kontakt miteinander sind.

Dabei ist die Prüfvorrichtung an einem Walzgerüst angeordnet, welches im Walzablauf vor dem Fertiggerüst positioniert ist.

## Patentansprüche

1. Verfahren zur zerstörungsfreien Prüfung beim Walzvorgang von zu walzendem, noch gut verformbaren Stahl auf Innenfehler mittels mindestens eines außen an der Walze/Rolle angeordneten Ultraschall-Prüfkopfes (5), der aus einem Ultraschallsender und einem Ultraschallempfänger besteht, bei welchem die Ultraschallwellen durch den als Vorlaufstrecke dienenden Walzen-/Rollenkörper (3a, 3b, 3c, 3') selbst oder einen umfangnahen Teil davon gesendet werden, bevor sie auf das zu prüfende Walzmaterial treffen, wobei sie derart ausgerichtet werden, dass sie dort auf die Walzmaterialoberfläche treffen, wo dieses den innigsten Kontakt mit der Walze/Rolle aufweist, dort nämlich, wo das maximale Rückwandecho erzielt wird, den zu prüfenden Stahl durchlaufen und von dem Ultraschallempfänger detektiert werden.

2. Verfahren nach Anspruch 1,
**dadurch gekennzeichnet,**
**dass** die Ultraschallwellen derart auf die Walzmaterialoberfläche treffen, dass sie nach Durchdringen des Walzmaterials in sich zum Empfänger zurückreflektiert werden.

3. Verfahren nach Anspruch 1,
**dadurch gekennzeichnet,**
**dass** die Ultraschallwellen derart auf die Walzmaterialoberfläche gerichtet sind, dass sie im Walzmaterial oberflächennah mehrfach entlang dem Umfang reflektiert werden, bevor sie zum Empfänger gelangen.

4. Verfahren nach einem der Ansprüche 1 bis 3,
**dadurch gekennzeichnet,**
**dass** der mindestens eine Ultraschallprüfkopf longitudinale Ultraschallwellen aussendet.

5. Verfahren nach einem der Ansprüche 1 bis 3,
**dadurch gekennzeichnet,**
**dass** der mindestens eine Ultraschallprüfkopf transversale Ultraschallwellen aussendet.

6. Vorrichtung zur zerstörungsfreien Prüfung beim Walzvorgang von zu walzendem, noch gut verformbaren Stahl auf Innenfehler mittels mindestens eines Ultraschallprüfkopfes (5), der aus einem Ultraschallsender und einem Ultraschallempfänger besteht,
**dadurch gekennzeichnet,**
**dass** der mindestens eine Ultraschall-Prüfkopf auβen an mindestens einer der am Walzvorgang beteiligten Walzen/Rollen (3a, 3b, 3c, 3') angeordnet ist, derart, dass der Walzen/Rollenkörper selbst oder ein umfangnaher Teil davon die Vorlaufstrecke für die Ultraschallwellen bildet, bevor sie auf das zu prüfende Walzmaterial treffen, und der mindestens eine Ultraschall-Prüfkopf (5) als Sender und/oder Empfänger ausgebildet ist und seine Ausrichtung derart wählbar ist, dass die Ultraschallwellen dort auf die Walzmaterialoberfläche treffen, wo dieses den innigsten Kontakt mit der Walze/Rolle (3a, 3b, 3c, 3') aufweist, wobei der mindestens eine Ultraschall-Prüfkopf (5) in Walzrichtung und/oder senkrecht dazu verschwenkbar und/oder verschiebbar ist und sich zwischen Ultraschall-Prüfkopf (5) und der ihm zugeordneten Walze/Rolle (3a, 3b, 3c, 3') bzw. der Ankoppelfläche ein Wasserfilm (15) befindet.

7. Vorrichtung nach Anspruch 6,
**dadurch gekennzeichnet,**
**dass** die Walzvorrichtung ein Mehrwalzengerüst ist, bei dem die scheibenförmigen Walzen/Rollen (3a, 3b, 3c,) sternförmig um den Walzspalt (2) herum angeordnet sind und jeder dieser Walzen/Rollen (3a, 3b, 3c) mindestens ein Ultraschallprüfkopf (5) zugeordnet ist.

8. Vorrichtung nach Anspruch 7,
**dadurch gekennzeichnet,**
**dass** auf jeder Seite jeder Walze/Rolle (3a, 3b, 3c) mindestens ein Ultraschall-Prüfkopf (5) angeordnet ist.

9. Vorrichtung nach einem der Ansprüche 6 bis 8,
**dadurch gekennzeichnet,**
**dass** der/die Ultraschall-Prüfkopf (-Köpfe) (5) in seitlich in die Walzen/Rollen (3a,3b, 3c, 3') eingeformten Ringnuten (8) positioniert ist/sind.

10. Vorrichtung nach einem der Ansprüche 6 bis 8,
**dadurch gekennzeichnet,**
**dass** der/die Ultraschall-Prüfkopf (-Köpfe) (5) auf seitlich an die Walzen/Rollen (3a, 3b, 3c) angeformten ringschulterartigen Vorsprüngen (7) positioniert ist/sind.

11. Vorrichtung nach Anspruch 6,
**dadurch gekennzeichnet,**
**dass** die Walzvorrichtung aus zwei Profilwalzen (3') besteht und der/die Ultraschall-Prüfkopf (-Köpfe) (5) seitlich so angeordnet ist/sind, dass die Schallwellen im rechten Winkel auf die durch das Profil gebildete Walzspalt-Wand (2) ausgerichtet sind.

12. Vorrichtung nach Anspruch 11,
**dadurch gekennzeichnet,**
**dass** jeweils zwei auf verschiedenen Seiten des Walzspaltes (2) angeordnete Ultraschall-Prüfköpfe (5) einander diametral entgegengesetzte Schallausbreitungsrichtung aufweisen.

13. Vorrichtung nach einem der Ansprüche 6 bis 12,
**dadurch gekennzeichnet,**
**dass** der mindestens eine Prüfkopf (5) einen Piezoschwinger als Schallerzeuger aufweist.

14. Vorrichtung nach einem der Ansprüche 6 bis 13,
**dadurch gekennzeichnet,**
**dass** der mindestens eine Prüfkopf (5) eine Vielzahl von unabhängig voneinander ansteuerbaren Piezoschwingern als Erzeuger einer Schallwellenfront aufweist.

15. Vorrichtung nach einem der Ansprüche 6 bis 14,
**dadurch gekennzeichnet,**
**dass** die Ankoppelfläche des/der Ultraschall-Prüfkopfes (-köpfe) (5) konvex oder konkav gewölbt ist.

16. Vorrichtung nach einem der Ansprüche 6 bis 15,
**gekennzeichnet durch**
die Anordnung an einem dem Fertiggerüst der Walzstraße vorausgehenden Walzgerüst.

## Claims

1. Destruction-free test method within the rolling process of ductile steel to be rolled, testing for internal faults by means of a minimum of one ultrasound probe (5) arranged on the outside of the roll, the probe comprising of an ultrasound sender and an ultrasound receiver whereby the ultrasound waves are sent through the roll body (3a, 3b, 3c, 3') itself serving as a start-up length or through a nearby part of it, before they hit the rolling material to be tested, whereby they are aligned in such a way that they hit the rolling material surface at a point where it has the closest possible contact with the roll, i.e. where the maximum back echo can be achieved, the test steel is passed through and the ultrasound receiver is able to detect them.

2. Method in accordance with claim 1,
**characterised in that**
the ultrasound waves hit the rolling material surface in such a way that they, within themselves, reflect back to the receiver after passing through the rolling material.

3. Method in accordance with claim 1,
**characterised in that**
the ultrasound waves are aimed at the rolling material surface in such a way that they reflect repeatedly within the rolling material close to the surface along the circumference, before they reach the receiver.

4. Method in accordance with one of the claims 1 to 3,
**characterised in that**
the minimum of one ultrasound probe sends out longitudinal ultrasound waves.

5. Method in accordance with one of the claims 1 to 3,
**characterised in that**
the minimum of one ultrasound probe sends out transversal ultrasound waves.

6. Destruction-free test arrangement within the rolling process of ductile steel to be rolled, testing for internal faults by means of a minimum of one ultrasound probe (5) arranged on the roll, the probe comprising of an ultrasound sender and an ultrasound receiver,
**characterised in that**,
the minimum of one ultrasound probe is located on the outside of at least one of the rolls (3a, 3b, 3c, 3') involved in the rolling process in such a way that the roll itself or a nearby part of it forms the start-up length for the ultrasound waves, before they hit the rolling material to be tested, and the minimum of one ultrasound test probe (5) is designed to be a sender and/or receiver and that its alignment can be selected in such a way that the ultrasound waves hit the rolling material surface at a point where it has the closest possible contact with the roll (3a, 3b, 3c, 3'), whereby the minimum of one ultrasound probe (5) is able to either swing and/or move in the rolling direction and/or vertically to it, and that there is a water film (15) between the ultrasound probe (5) and the roll (3a, 3b, 3c, 3') allocated to it or the interface.

7. Arrangement in accordance with claim 6,
**characterised in that**,
the rolling facility is one with several rolls in which the disc-shaped rolls (3a, 3b, 3c,) are arranged in a star formation around the roll gap (2) and that each of these rolls (3a, 3b, 3c) is allocated a minimum of one ultrasound probe (5).

8. Arrangement in accordance with claim 7,
**characterised in that**,
on each side of every roll (3a, 3b, 3c) there is a minimum of one ultrasound probe (5).

9. Arrangement in accordance with one of the claims 6 to 8,
**characterised in that**,
the ultrasound probe(s) (5) is/are positioned into moulded ring grooves (8) on the side of the rolls (3a, 3b, 3c, 3').

10. Arrangement in accordance with one of the claims 6 to 8,
**characterised in that**,
the ultrasound probe(s) (5) is/are positioned on protrusions (7) moulded in the shape of an annular shoulder.

11. Arrangement in accordance with claim 6,
**characterised in that**,
the rolling facility comprises of two corrugated rolls (3') on to which the ultrasound probe (s) (5) is/are arranged on the side in such a way that the sound waves are aligned at a right angle to the roll gap wall formed by the profile.

12. Arrangement in accordance with claim 11,
**characterised in that**,
the two ultrasound probes (5) arranged on either side of the roll gap (2) have a sound propagation direction which is diametrically opposed.

13. Arrangement in accordance with one of the claims 6 to 12,
**characterised in that**,
the minimum of one probe (5) has a piezo-oscillator to generate sound.

14. Arrangement in accordance with one of the claims 6 to 13,
**characterised in that**,
the minimum of one probe (5) has several, piezo-oscillators controllable independently from one another generating a wall of sound waves.

15. Arrangement in accordance with one of the claims 6 to 14,
**characterised in that**,
the connection surface of the ultrasound probe(s) (5) is either concave or convex.

16. Arrangement in accordance with one of the claims 6 to 15,
**characterised in that**,
it is designed in such a way that a roll framework precedes the final framework of the rolling train.

## Revendications

1. Procédé d'essai non destructif lors du laminage d'un acier à laminer encore bien déformable, portant sur des défauts internes, au moyen d'au moins une tête d'essai à ultrasons (5) disposée à l'extérieur sur le cylindre/rouleau, laquelle est constituée d'un émetteur d'ultrasons et d'un récepteur d'ultrasons, avec laquelle les ondes ultrasonores sont émises à travers le corps de cylindre/rouleau (3a, 3b, 3c, 3') lui-même servant de parcours aller ou une partie proche de la périphérie de celui-ci, avant de parvenir sur le matériau de laminage à contrôler, et sont orientées de manière qu'elles parviennent sur la surface du matériau de laminage là où celui-ci présente le contact le plus intime avec le cylindre/rouleau, c'est-à-dire là où est obtenu l'écho de paroi arrière maximal, traversent l'acier à contrôler, et sont détectées par le récepteur d'ultrasons.

2. Procédé selon la revendication 1,
**caractérisé**
**en ce que** les ondes ultrasonores parviennent sur la surface du matériau de laminage de manière à être rétroréfléchies vers le récepteur, après avoir traversé le matériau de laminage.

3. Procédé selon la revendication 1,
**caractérisé**
**en ce que** les ondes ultrasonores sont dirigées vers la surface du matériau de laminage de manière à être réfléchies plusieurs fois le long de la périphérie, dans le matériau de laminage, à proximité de la surface, avant de parvenir au récepteur.

4. Procédé selon l'une des revendications 1 à 3,
**caractérisé**
**en ce que** la au moins une tête d'essai à ultrasons émet des ondes ultrasonores longitudinales.

5. Procédé selon l'une des revendications 1 à 3,
**caractérisé**
**en ce que** la au moins une tête d'essai ultrasonore émet des ondes ultrasonores transversales.

6. Dispositif d'essai non destructif lors du laminage d'un acier à laminer encore bien déformable, portant sur les défauts internes, au moyen d'au moins une tête d'essai à ultrasons qui est constituée d'un émetteur d'ultrasons et d'un récepteur d'ultrasons,
**caractérisé**
**en ce que** la au moins une tête d'essai à ultrasons est disposée à l'extérieur sur au moins l'un des cylindres/rouleaux (3a, 3b, 3c, 3') participant au laminage, de manière que le corps de cylindre/rouleau lui-même ou une partie proche de la périphérie de celui-ci constitue le parcours aller des ondes ultrasonores, avant qu'elles ne parviennent sur le matériau de laminage à contrôler, et la au moins une tête d'essai à ultrasons (5) est conçue en tant qu'émetteur et/ou récepteur et son orientation peut être choisie de manière que les ondes ultrasonores parviennent sur la surface du matériau de laminage là où celui-ci présente le contact le plus intime avec le cylindre/rouleau (3a, 3b, 3c, 3'), la au moins une tête d'essai à ultrasons (5) pouvant pivoter et/ou coulisser dans la direction du laminage et/ou perpendiculairement à celle-ci, et une pellicule d'eau (15) se trouvant entre la tête d'essai à ultrasons (5) et le cylindre/rouleau (3a, 3b, 3c, 3') qui lui est associé ou la surface de couplage.

7. Dispositif selon la revendication 6,
**caractérisé**
**en ce que** le dispositif de laminage est une cage à plusieurs cylindres dans laquelle les cylindres/rouleaux (3a, 3b, 3c) en forme de disque sont disposés en étoile autour de la fente de laminage (2) et à chacun de ces cylindres/rouleaux (3a, 3b, 3c) est associée au moins une tête d'essai à ultrasons (5).

8. Dispositif selon la revendication 7,
**caractérisé**
**en ce que** sur chaque côté de chaque cylindre/rouleau (3a, 3b, 3c) est disposée au moins une tête d'essai à ultrasons (5).

9. Dispositif selon l'une des revendications 6 à 8,
**caractérisé**
**en ce que** la/les tête(s) d'essai à ultrasons (5) est/sont positionnée(s) dans des rainures annulaires (8) formées dans les cylindres/rouleaux (3a, 3b, 3c, 3').

10. Dispositif selon l'une des revendications 6 à 8,
**caractérisé**
**en ce que** la/les tête(s) d'essai à ultrasons (5) est/sont positionnée(s) latéralement sur des saillies (7) de type épaulement annulaire formées sur les cylindres/rouleaux (3a, 3b, 3c).

11. Dispositif selon la revendication 6,
**caractérisé**
**en ce que** le dispositif de laminage est constitué de deux cylindres profilés (3') et la/les tête(s) d'essai à ultrasons (5) est/sont disposée(s) latéralement de manière que les ondes sonores soient orientées à angle droit sur la paroi de fente de laminage (2) formée par le profilé.

12. Dispositif selon la revendication 11,
**caractérisé**
**en ce que** chaque fois deux têtes d'essai à ultrasons (5) disposées sur différents côtés de la fente de laminage (2) comportent des dispositifs de propagation du son diamétralement opposés l'un à l'autre.

13. Dispositif selon l'une des revendications 10 à 12,
**caractérisé**
**en ce que** la au moins une tête d'essai (5) comporte un piézo-oscillateur en tant que générateur de son.

14. Dispositif selon l'une des revendications 6 à 13,
**caractérisé**
**en ce que** la au moins une tête d'essai (5) comporte une pluralité de piézo-oscillateurs commandables indépendamment les uns des autres en tant que générateurs d'un front d'onde sonore.

15. Dispositif selon l'une des revendications 6 à 14,
**caractérisé**
**en ce que** la surface de couplage de la/des tête(s) d'essai à ultrasons (5) est bombée convexe ou concave.

16. Dispositif selon l'une des revendications 6 à 15,
**caractérisé par**
sa disposition sur une cage de laminoir présentant la cage de finition du train de laminage.
